# EUROPEAN PATENT APPLICATION

(11) **EP 0 773 670 A2**
(43) Date of publication of application: **14.05.1997**
(21) Application number: 96402186.9
(22) Date of filing: 15.10.1996
(51) Int. Cl.: H04N 3/185

(54) **Deflection circuit with compensation**

(30) Priority: 13.11.1995 GB 9523193
(71) Applicant: Thomson multimedia, 92050 Paris La Défense Cedex 66 (FR)
(72) Inventor: Zee, Kum Yoong, Taman Johor Jaya, J.B. (MY)
(74) Representative: Brykman, Georges

(57) **Abstract**

It is known that the deflection in a cathode ray tube (CRT) depends on the intensity and on the variation of an extremely high tension (EHT) voltage for said CRT. It is the object to compensate the influence of the EHT voltage on the deflection. This is realised by a correction such that a signal (FB) is detected which depends on the value of the EHT voltage and that said signal (FB) is led to a control input of a detection circuit. It is preferred that said signal (FB) is detected by a wire which is attached to the outer surface of the CRT and that the signal (FB) is filtered and led to an input of a phase detector, which is included in that detection circuit.

## Description

The present invention relates to a deflection circuitry according to the preamble of claim 1.

It is generally known that a device for displaying video signals, like e.g. a TV-set, a monitor or the like, uses extremely high tension (EHT) voltages for the acceleration of electrons inside a display tube having a screen for displaying video pictures. the electrons are deflected by a horizontal deflection circuit in the direction of video lines (mainly horizontal) and by a vertical deflection circuit in vertical direction.

It is also known to drive primary windings of a so-called deflection transformer with the output signal from the horizontal deflection circuit. Secondary windings of the deflection transformer are provided for generating the EHT voltage and for generating a deflection current, normally having a sawtooth-like shape.

It has shown that the deflection current signal is influenced by a variation in the EHT voltage. Such variation may occur e.g. in those cases when bright pictures or bright parts of a picture to be displayed appear. This effect can be explained, at least for some devices, by the effect that a bright picture requires a higher electron beam current. due to the characteristic of the deflection transformer a high electron beam current causes a decrease of the EHT voltage, but also an influence on the deflection current signal.

It is the object of the present invention to compensate the influence of a variation of the EHT voltage on the deflection current signal.

This object is solved by he deflection circuit according to claim 1. Advantageous embodiments are given by the subclaims.

According to the present invention, a detector, which may be any conductive means, like e.g. a wire, a coil, a capacitor, etc., is provided near means which conduct the EHT voltage; "near" means sufficiently near so that field produced by conductor of EHT voltage can influence an electric value in the conductive means. The detector detects a variation in the EHT voltage by sensing an according signal and leads this signal as correction signal to control inputs of a deflection circuit.

it is preferred that the detector is attached to the outer surface of a display tube, like a cathode ray tube (CRT). This is based on the following principle.

The EHT voltage is led to an anode of the display tube. The anode terminal is normally connected to a capacitor, which is realised by a first coating, which is on the inner side of the tube, and a second coating on the outer side of the tube. the first coating is connected to the EHT voltage and the outer coating, which is also called aquadag, is connected to ground.

So, the detector may be attached in areas without the outer coating, because it was found that, due to non-perfect connections between the outer coating and ground, the voltage or potential on the outer coating varies when there is a variation of the EHT voltage. This non-perfect connection may be caused by the connections between the outer coating and according wires and/or by the resistance of the coating material.

In a preferred embodiment the detected voltage signal is filtered by filter means, whereby an according correction signal is generated. The filter means may include a R/.C element, including a resistor R and a capacitor C, which may be connected in series, parallel or connected to ground.

Further details and advantages of the present invention will now be described with the aid of preferred embodiments and accompanying drawings, wherein
Fig. 1 shows a disturbed video picture generated by prior art devices;
Fig.2 shows in principle the connections to a tube according a first embodiment;
Fig.3 shows an enlargement of area A of Fig.2;
Fig.4 shows a block diagram of a preferred embodiment;
Fig.5 shows connections according to a further embodiment.

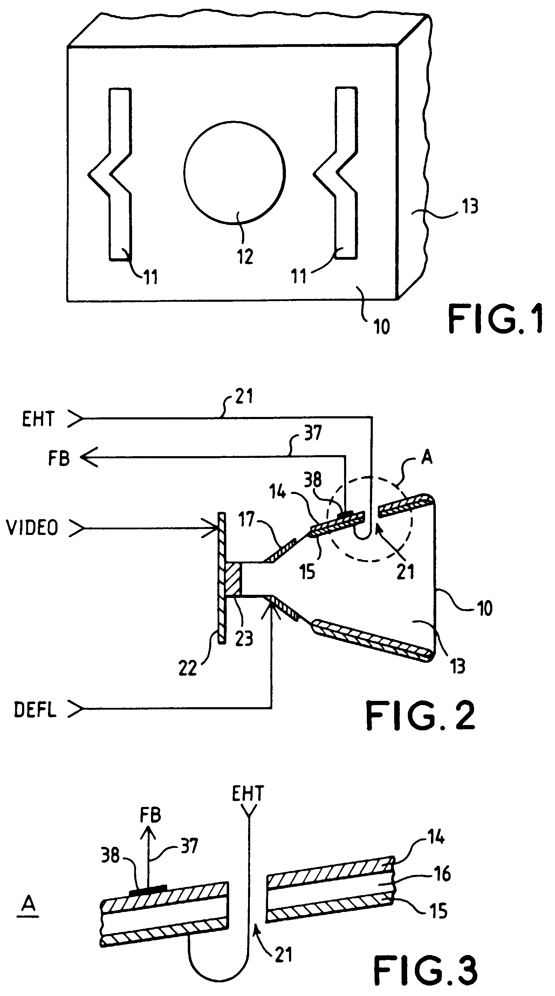

Fig. 1 shows in principle the effect which occurs by known display devices, like a TV set, in those cases when a deflection signal is influenced by a EHT voltage and when bright symbols are to be displayed.

On a screen 10 of a tube 13 a so-called PHILIPS pattem is to be displayed, which includes bright bars 11 and a circle 12. The bright bars cause a high electron beam current of a (non shown) electron beam inside the tube 13, whereby the bars 11 are crooked to the left side due to the distortion of the deflection current signal.

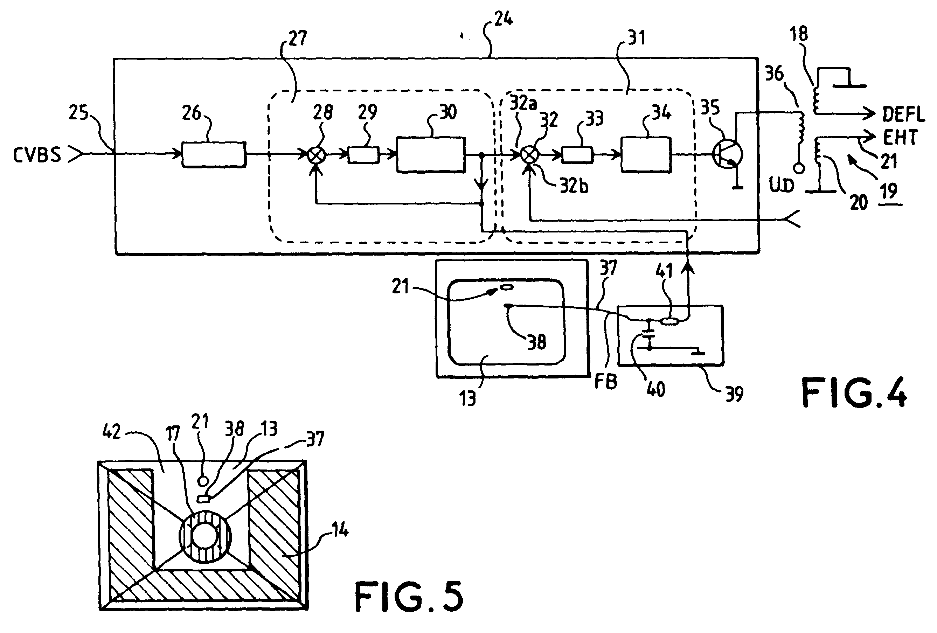

A preferred embodiment is explained with the aid of Fig.2-4. Means with the same function as in prior art display of Fig.1 are indicated with the same reference numbers. Fig.2 and 3 show connections to the tube 13 according to the preferred embodiment and Fig.4 shows a block diagram to the embodiment.

As shown in Fig.2 the tube 13 is coated on the outer side with an outer coating 14 and on the inner side with an inner coating 15. Between these coatings 14, 15 a glass 16 is provided which forms the body of the tube 13. This can best be seen in Fig.3, which is an enlargement of the area A, indicated by the circle in Fig.2.

The tube 13 includes well known and therefore not shown means for generating and intensity-modulating an electron beam. These means are controlled with the aid of a signal VIDEO, which is led to a board 22, which itself is connected via a connection 23 to said means. The electron beams are deflected with the aid of a deflection coil 17, which is driven by a deflection current signal DEFL, which is generated by a first secondary winding 18 of a deflection transformer 19. A second secondary winding 20 of transformer 19 generates a high voltage signal EHT, which is led via a transmission line 21 from the outer side to the inner side of the tube 13 and to a not shown anode of the means for generating an electron beam and also to the inner coating 15 of tube 13.

Fig.4 shows a deflection circuit 24 having an input 25 to which a CVBS signal is led, which includes video information to be processed. The deflection circuit 24 also includes a sync separator 26, output of which is connected with the input of a first phase comparator 27. this phase comparator 27 includes a first phase detector 28, which receives said output signal of the sync separator 26 at a first input. Output signals of said detector 28 are led to a first low pass filter (LPF) 29, output of which is connected to a voltage controlled oscillator (VCO) 30 including a not shown line oscillator devider. Output of the VCO 30 is connected to a second input of the detector 28 and also to the input of a second phase comparator 31, which includes a second phase detector 32 and a second LPF 33. Output of the LPF 33 is connected to the input of the horizontal drive stage 34, output of which is connected to the base of a transistor 35, collector of which is connected to primary winding 36 of the transformer 19, which is also connected to UD, e.g. about 200V. A first input 32a of the second detector 32 is connected with the output of the first phase comparator 27 and a second input 32b of the second detector 32 is connected to a signal HEAT from a heater inside the tube 13.

Due to the connection to the heater, the deflection frequency is synchronised by a closed loop control to the line frequency of the CVBS signal.

A wire 37 is connected with the aid of a connection 38 to the outer coating 14 and leads a signal FB from the coating to a filter 39. This filter 39 includes a capacitor 40 (e.g. of 1nF), which is connected between the wire 37 and ground, and a resistor 41 (e.g. of 2.2 MOhm), which is provided between the wire 37 and the first input of the second detector 32, which corresponds to the second input of the first detector 28 and to the output of VCO 30.

The connection 38 can be realised as it is well known by persons skilled in the art, e.g. by soldering, glueing or by using a tape or a sponge.

As the signal FB depends on a variation of the EHT voltage, the signal FB can be used as correction signal for the deflection circuit 24. In the above described embodiment, the signal is filtered and led to the first input 32a of detector 32. It is also possible to lead the signal FB to the second input 32b of the second detector 32. The filter 39 may be adapted accordingly, which may be easily done by a person skilled in the art.

In a further embodiment, the connection 38 is not attached tot he outer coating 14, but is provided in an area without the outer coating. This means that the connection is attached to the glass 16.

One preferred solution of this embodiment is shown in Fig.5, which shows the backside of the tube 13. Beside the area with the outer coating 14 there is also an area 42 which is not coated at the outside of the tube 13. in this area 42 there is the connection 38 provided, which can be realised e.g. in the way that the wire 37 is attached to the glass with the aid of a glue, a tape, a sponge, or any other means known to a person skilled in the art.

It is also possible that the wire 37 or the connection 38 is not directly connected to the glass 16, but through other means, which are in the area of the tube 13 or in the area of means conducting the EHT voltage.

In other words, the connection 38 or the wire 37, respectively, may be provided anywhere where a variation of the EHT voltage can be detected, even in direct or indirect capacitive and/or inductive connection with the transformer 19.

## Claims

1. Deflection circuit for a cathode ray tube (CRT)(13), the CRT (13) having
- an inner and an outer surface, the outer surface having coated parts (14) and uncoated parts (42)
- means for generating an electron beams, intensity of which depends on the value of a high voltage signal (EHT)
- means (21) to conduct said high voltage signal (EHT) towards the inner surface of the CRT
- deflection circuit (24) coupled to deflection means (17) to deflect the electron beam, said deflection circuit (24) having a control input (32a) to receive a detection signal (FB), value of which depends on the voltage value of said high voltage signal (EHT)
- detection means to provide said FB signal value of which depends on the voltage value of said EHT signal, wherein said detection means is made by any conductive means (37, 38) provided near means (21, 15) which conduct said EHT signal.

2. Deflection circuitry according to claim 1, characterised in that said detection means (37, 38) are attached on the outer side of display means (13).

3. deflection circuitry according to claim 1, wherein said detection means (37, 38) are connected to a conductive layer (14) provided on the outer side of said CRT (13).

4. Deflection circuitry according to claim 1, wherein said detection means are attached to the outside uncoated part of the tube (13).

5. Deflection circuitry according to any of the claims 1 to 4, wherein said detection signal (FB) is provided to said control input of said deflection circuit through filter means (39).

6. Deflection circuitry according to claim 5, characterised in that said filter means (39) includes a R/C element (40, 41).

7. Deflection circuitry according to any of the claims 1 to 6, characterised in that said deflection circuit (24) includes phase detection means (32) and that said detected signal (FB) is led to an input (32a, 32b) of said phase detection means (32).
